**Europäisches Patentamt**

(19) **European Patent Office**

**Office européen des brevets**

(11) Numéro de publication: **0 102 870**
**B1**

(12) # FASCICULE DE BREVET EUROPEEN

(45) Date de publication du fascicule du brevet:
**29.10.86**

(51) Int. Cl.⁴: **G 01 N 1/24**, B 01 D 46/26

(21) Numéro de dépôt: **83401538.0**

(22) Date de dépôt: **26.07.83**

(54) **Capteur individuel portatif de poussières.**

(30) Priorité: **03.08.82 FR 8213541**

(43) Date de publication de la demande:
**14.03.84 Bulletin 84/11**

(45) Mention de la délivrance du brevet:
**29.10.86 Bulletin 86/44**

(84) Etats contractants désignés:
**AT BE CH DE GB IT LI LU NL SE**

(56) Documents cités:
**DE - A - 2 016 032**
**FR - A - 2 086 984**
**FR - A - 2 389 119**
**US - A - 3 949 594**

**ANALYTICAL CHEMISTRY, vol. 49, no. 2, octobre 1977, pages 1668-1672, Columbus, USA R.G. LEWIS et al.: "Evaluation of polyurethane foam for sampling of pesticides, polychlorinated bibphenyls and polychlorinated naphthalenes in ambient air"**

(73) Titulaire: **Etablissement public dit: CHARBONNAGES DE FRANCE, 9, Avenue Percier, F-75008 Paris (FR)**

(72) Inventeur: **Courbon, Paul, 59bis, rue Wallon Apremont, F-60300 Senlis (Oise) (FR)**

(74) Mandataire: **Chevallier, Robert Marie Georges et al, Cabinet BOETTCHER 23, rue La Boétie, F-75008 Paris (FR)**

## Description

L'invention a pour objet un capteur individuel, que toute personne peut porter sur elle, servant à prélever dans l'atmosphère environnante les poussières en suspension et à retenir à des fins d'analyse ultérieure celles qui ont des dimensions telles qu'elles peuvent pénétrer dans les alvéoles pulmonaires de cette personne et y être retenues. De cette façon, on peut évaluer et même doser la quantité de poussières dites respirables qu'une personne a été susceptible d'inhaler pendant une période donnée aux divers endroits d'un milieu où elle a respiré pendant cette période.

On connaît déjà des appareils de prélèvement de poussières dans une atmosphère polluée dans lesquels on se sert d'un rotor en matière filtrante entraîné en rotation à une vitesse constante. On en trouve la description dans le brevet français no 2 039 560 et son certificat d'addition 2 082 180.

On connaît aussi par le brevet français no 2 389 119 un dispositif de prélèvement sélectif de poussières dans une atmosphère poussiéreuse.

Il s'agit d'appareils conçus pour être portables, c'est-à-dire assez légers pour être déplaçables par une personne seule entre deux points d'utilisation mais trop lourds pour être portés en permanence par cette personne au cours de ces occupations. Typiquement, le poids d'un tel appareil est de l'ordre de 29,4 N (3 kg). Par conséquent, quand on s'en sert on le pose sur le sol ou on le suspend à un endroit nécessairement éloigné des points précis et changeants où cette personne respire pendant ses occupations.

Or, il est utile d'être renseigné aussi exactement que possible sur la quantité de poussières respirables qu'une personne a pu inhaler effectivement pendant une durée donnée. Les appareils connus ne sont pas satisfaisants à cet égard puisqu'on sait que la densité des poussières varie rapidement entre le lieu même où elles sont produites, non loin duquel respire la personne en question, et le lieu plus éloigné et plus abrité où est placé l'appareil de prélèvement des poussières.

Le brevet français no 2 389 119 concerne un dispositif dont il est dit qu'il pourrait être adapté pour devenir portatif. L'invention vise à parvenir à un capteur individuel notablement simplifié dans sa constitution en comparaison du dispositif de ce brevet, ayant une efficacité au moins égale et suffisamment allégé et simplifié pour pouvoir être facilement réalisé sous forme d'un appareil de petites dimensions.

Plus précisément l'invention a pour but d'arriver à un appareil de captation de poussières aussi efficace que les appareils connus mais susceptibles d'être porté en permanence par une personne même pendant l'exécution d'un travail pénible ou dangereux. L'appareil doit donc être léger et peu encombrant. Il en résulte que les moyens prévus sur les appareils classiques pour opérer une classification des poussières (cyclone par exemple) avant leur captation ne sont plus acceptables.

L'invention concerne un capteur portatif individuel de poussières susceptibles d'être retenues dans les poumons, comprenant une coupelle entraînée en rotation ayant un fond et une paroi latérale, une couronne en mousse filtrante à canal central logée dans la coupelle, un couvercle à entrée d'air centrale et à sortie d'air latérale entourant la coupelle, un chapeau à passage d'air coiffant l'entrée d'air centrale du couvercle et ayant une paroi extrême terminale, des moyens de séparation des poussières les plus grosses logés dans ledit chapeau. Selon l'invention, lesdits moyens de séparation des poussières sont constitués par au moins un bloc de préfiltration remplissant le chapeau et il est prévu après ce(s) bloc(s) un conduit à section droite diminuant de valeur pour son raccordement à l'entrée d'air centrale du couvercle, cette entrée aboutissant à un orifice de sortie de diamètre inférieur au canal central de la couronne en mousse filtrante, disposé coaxialement à ce canal, cette couronne en mousse ayant une épaisseur égale à la hauteur de la paroi latérale de la coupelle et présentant dans un plan transversal une face latérale substantiellement découverte tournée du côté de l'entrée d'air centrale.

Le but recherché s'atteint par l'emploi de moyens différents et par une conception différente appropriée du circuit du courant gazeux à l'intérieur d'un capteur portatif.

L'orifice de sortie du conduit a une dimension inférieure à celle du canal central de la couronne en mousse. Il se trouve, de préférence, dans un plan transversal qui est le plan de la face latérale découverte de la couronne en mousse.

Le couvercle à sortie d'air latérale présente des trous de sortie d'air situés sur deux côtés diamétralement opposés répartis dans deux secteurs angulaires opposés; de préférence ces secteurs ont chacun un développement de 80° environ.

Ces trous se trouvent avantageusement dans un plan transversal qui est en retrait en direction du fond de la coupelle par rapport au plan transversal de la face latérale découverte de la couronne en mousse; la distance de retrait est de 45 à 50% de l'épaisseur de la couronne en mousse, par exemple.

De préférence, le chapeau à passage d'air est percé d'au moins un trou à travers sa face extrême, directement en face du bloc de préfiltration dans le sens de circulation d'air à travers ce dernier.

Selon un mode préféré de réalisation de l'invention, le chapeau contient un seul bloc de préfiltration en mousse filtrante de grade 45 et la couronne est en mousse filtrante de grade 80 ou 100.

En variante, il est possible de disposer en série à l'intérieur du chapeau plusieurs blocs successifs de préfiltration à plusieurs grades différents intermédiaires de plus en plus fins avant la couronne en mousse. Selon une autre variante, le chapeau contient un déflecteur concave dont le fond concave est situé en face d'au moins un trou central percé dans la face extrême du chapeau et dont la périphérie présente plusieurs ouvertures espacées s'ouvrant en face du bloc de préfiltration.

On donnera maintenant, sans intention limitative, une description d'un exemple préféré de réalisation de l'invention. On se reportera au dessin annexé dans lequel:

– la figure 1 est une vue en coupe par un plan longitudinal d'un capteur individuel portatif conforme à l'invention,

– la figure 2 est une vue schématique partielle montrant une variante du chapeau de l'appareil de la figure 1,

– la figure 3 est une vue en coupe diamétrale et en perspective d'une couronne en mousse après utilisation du capteur de la figure 1.

Un capteur portatif individuel réalisé conformément à l'invention comprend un corps creux 1 qui contient un moteur 2 associé à un interrupteur latéral 3. Ce corps 1 est conçu pour contenir aussi en dessous du moteur 2 une source d'énergie électrique 4. En position d'utilisation l'arbre 5 du moteur 2 est vertical, dirigé vers le haut à travers un palier 6, et il se termine par un plateau aimanté 7. A ce dernier adhère pour être entraîné en rotation une coupelle 8 qui a un fond 8A et une paroi latérale 8B. Cette coupelle 8 contient dans la totalité de son volume une couronne 9 en mousse filtrante qui a un canal central 10. La hauteur de la paroi latérale 8B, ou la profondeur de la coupelle 8, est identique à l'épaisseur de la couronne en mousse 9 de sorte que celle-ci présente, quand elle est logée dans la coupelle 8, une face latérale 11 totalement découverte située dans un plan transversal 12, indiqué en trait mixte, qui est aussi le plan de la face extrême annulaire de la paroi latérale 8B. La face 11 est tournée du côté de l'arrivée de l'air à filtrer mais elle n'est pas rencontrée par l'air qui arrive comme on le comprendra mieux plus loin.

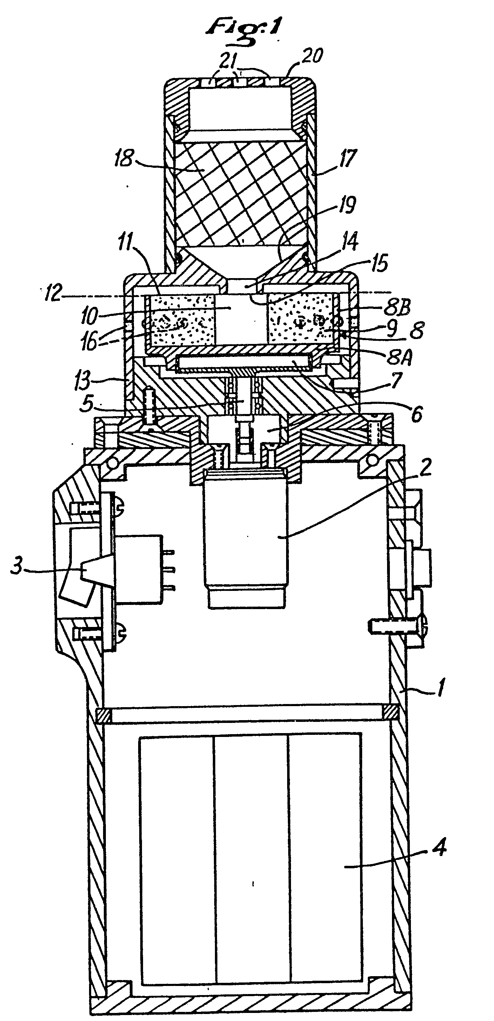

L'ensemble rotatif qui vient d'être décrit est enfermé dans un couvercle 13 fixé au corps 1 de façon démontable. Ce couvercle 13 a une entrée d'air centrale 14 dont le diamètre est inférieur au diamètre du canal central 10 de la couronne en mousse 9. De plus, cette entrée d'air centrale 14 aboutit à une orifice de sortie 15 de même diamètre, coaxial au canal central 10, et qui se trouve avantageusement dans le plan transversal 12. Le couvercle 13 a également une sortie d'air qui est composée de deux fentes ou de deux rangées de trous 16 percés à travers la paroi latérale en deux endroits diamétralement opposés l'un à gauche et l'autre à droite sur la figure 1. Chaque rangée de trous s'étend sur un secteur de 80° environ. Tous les trous 16 se trouvent dans un plan transversal qui est en retrait par rapport au plan transversal 12. La valeur de ce retrait est voisine de la moitié de l'épaisseur de la couronne en mousse 9.

Sur le couvercle 13 est monté un chapeau 17 à passage d'air coiffant l'entrée d'air centrale 14. Ce chapeau 17 contient au moins un bloc 18 en mousse filtrante de préfiltration qui a un diamètre supérieur à celui de l'entrée d'air centrale 14. Entre les deux est prévu un conduit 19, convergent par exemple, qui communique avec le canal central 14 en se raccordant avec lui. En fait, dans cet exemple toute la zone de jonction est réalisée dans le couvercle 13 dans lequel sont ménagés successivement le conduit 19 et le canal central 14 terminé par son orifice 15. De l'autre côté du bloc 18 en mousse filtrante le chapeau 17 a une paroi terminale transversale 20 à travers laquelle sont percés plusieurs trous longitudinaux 21 d'entrée d'air. Ces trous 21 s'ouvrent directement en face du bloc 18 dans le sens du passage de l'air à travers ce dernier.

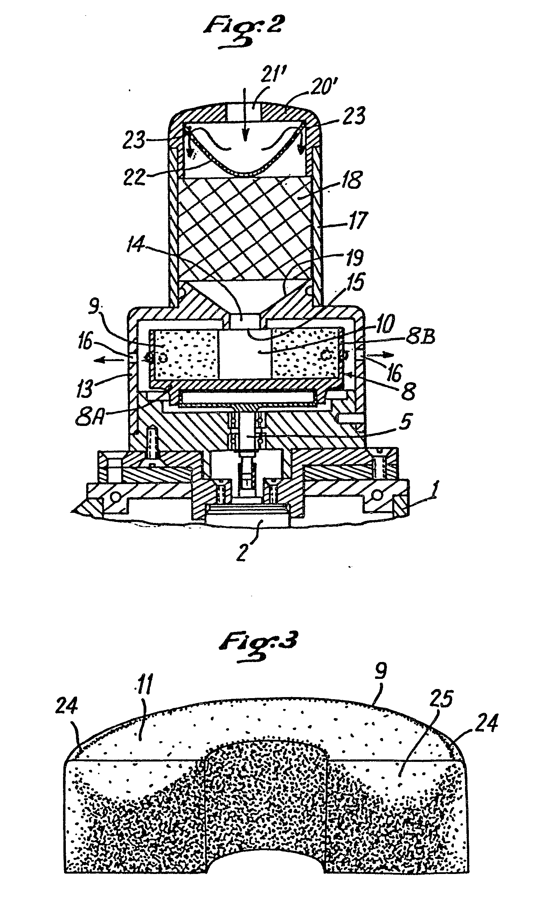

Dans une variante du capteur portatif de l'invention illustré par la figure 2, le chapeau 17 se termine par une paroi terminale transversale 20' ayant un trou central longitudinal 21' s'ouvrant en face du fond concave d'un déflecteur concave intérieur 22. Ce dernier est disposé en amont du bloc 18 et il a dans sa zone périphérique plusieurs ouvertures espacées 23 ouvertes en face de ce bloc 18, l'air aspiré par la rotation de la coupelle 8 arrivant, comme indiqué par des flèches en un courant axial central pour suivre radialement le déflecteur et former plusieurs courants axiaux périphériques dirigés directement sur le bloc 18 de préfiltration.

Quand le capteur portatif individuel est destiné à son usage essentiel, le bloc de préfiltration 18 est en mousse à pores ouverts de grade 45 (signifiant qu'elle a 45 cellules par pouce linéaire ou 45 cellules par longueur de 25,4 mm), tandis que la couronne 9 est en mousse à pores ouverts de grade 80 (ou 100) soit 80 (ou 100) cellules par longueur de 25,4 mm.

Ainsi constitué, le capteur décrit réalise une coupure de filtration au voisinage d'une grosseur de particules de 5 microns, les plus grosses sont retenues dans le bloc 18 de préfiltration, celles qui sont susceptibles d'être retenues dans les poumons (dans la gamme de 5 microns à 0,5 micron) sont retenues dans la couronne en mousse 9; les plus fines ressortent du capteur par les trous 16. Comme ceux-ci sont placés sur deux côtés opposés, comme le montre aussi la figure 2 qui est une coupe par un plan sensiblement analogue au plan de coupe de la figure 1, le capteur peut être porté sur la poitrine, suspendu au cou ou à l'épaule d'un utilisateur.

En choisissant pour le bloc de préfiltration 18 une mousse de grade différent de celui qui est indiqué plus haut on peut modifier la coupure de filtration, par exemple pour satisfaire à des normes existantes. En particulier, au lieu de choisir une coupure qui correspond à une grosseur de 5 microns des particules on peut la fixer à une valeur différente comme 7 ou 10 µm, par exemple.

La variante du chapeau 17 illustré par la figure 2 est utile dans une atmosphère qui contient des particules plus grosses ou des particules assez grosses en grande quantité: elles sont retenues en grande partie dans le fond du déflecteur concave 22. On pourrait aussi placer dans le déflecteur 22 un bloc de mousse filtrante ne retenant que les particules les plus grosses.

Il est possible de remplacer le bloc de préfiltration 18 par plusieurs préfiltres successifs de porosité décroissante (c'est-à-dire de grade croissant) afin de séparer et de recueillir plusieurs tranches distinctes de granulométrie décroissante et opérer du même coup une analyse sommaire des dimensions des poussières.

Etant donné que la dimension des particules arrêtées ne dépend pas que de la porosité (ou du grade) de la mousse mais aussi de la vitesse du gaz qui la traverse (une vitesse plus élevée s'accompagnant de l'arrêt de grains plus petits) on peut agir aussi sur le diamètre des préfiltres, par exemple en les entourant d'une bague pleine plus ou moins épaisse à l'intérieur du chapeau 17, afin de réaliser diverses tranches de préfiltration au-dessus des dimensions de 5 microns.

Pour fixer les idées à ce sujet, on précisera que dans le capteur décrit ici en exemple, la vitesse des gaz était de 0,35 m/s avec un moteur tournant à 7000 t/mn et aspirant de l'air à un débit de 600 l/h environ. Le préfiltre avait un diamètre de 25 mm, une épaisseur de 20 mm et la couronne 9 avait un diamètre extérieur de 35 mm.

La figure 3 montre en coupe diamétrale une couronne 9 en mousse filtrante de grade 80, la face latérale 11 découverte étant vue légèrement de dessus en perspective. Le courant d'air chargé de poussières à 5 microns et moins qui sort de l'orifice 15 est réparti sensiblement sur toute la hauteur de la couronne 9 et de la couronne 8; il est chassé radialement par la force centrifuge en abandonnant ses poussières supérieures à 0,5 µm et il sort par la face découverte 11 en empruntant une bande annulaire étroite 24 le long de la paroi latérale 8B de la coupelle 8, en contournant un demi-tore central 25 coupé par la face latérale 11. Cette bande annulaire 24 doit toujours rester découverte sur la face 11. Le profil de ce demi-tore central 25 dépend de la composante entre d'une part, la vitesse axiale du courant d'air à la sortie de l'orifice 15 après sa concentration par le conduit 19, d'autre part, la vitesse de rotation de la coupelle 8 et de la couronne 9 en mousse filtrante.

Une pesée précise avant et après utilisation de la coupelle 8 contenant la couronne 9 en mousse ou de celle-ci seule fournit le poids des poussières retenues par l'appareil.

**Revendications**

1. Capteur portatif individuel de poussières susceptibles d'être retenues dans les poumons, comprenant une coupelle (8) entraînée en rotation ayant un fond (8A) et une paroi latérale (8B), une couronne (9) en mousse filtrante à canal central (10) logée dans la coupelle (8), un couvercle (13) à entrée d'air centrale (14) et à sortie d'air latérale entourant la coupelle (8), un chapeau (17) à passage d'air coiffant l'entrée d'air centrale (14) du couvercle (13) et ayant une paroi extrême terminale (20, 20'), des moyens (18) de séparation des poussières les plus grosses logés dans ledit chapeau (17), caractérisé en ce que lesdits moyens (18) de séparation des poussières sont constitués par au moins un bloc (18) de préfiltration remplissant le chapeau et qu'il est prévu après ce(s) bloc(s) un conduit (19) à section droite diminuant de valeur pour son raccordement à l'entrée d'air centrale (14) du couvercle (13), cette entrée (14) aboutissant à un orifice de sortie (15) de diamètre inférieur au canal central (10) de la couronne (9) en mousse filtrante, disposé coaxialement à ce canal (10), cette couronne (9) en mousse ayant une épaisseur égale à la hauteur de la paroi latérale (8B) de la coupelle (8) et présentant dans un plan transversal (12) une face latérale substantiellement découverte (11) tournée du côté de l'entrée d'air centrale (14).

2. Capteur selon la revendication 1, caractérisé en ce que l'orifice de sortie (15) se trouve dans le plan transversal (12) de la face latérale (11) de la couronne (9) en mousse.

3. Capteur selon la revendication 1, caractérisé en ce que la sortie de l'air hors du couvercle (13) se fait par des trous (16) percés dans sa paroi latérale en deux endroits diamétralement opposés, dans un plan transversal en retrait par rapport au plan transversal (12).

4. Capteur selon la revendication 3, caractérisé en ce que la valeur du retrait du plan transversal des trous (16) est comprise entre 45% et 50% de l'épaisseur de la couronne (9) en mousse.

5. Capteur selon la revendication 1, caractérisé en ce que le chapeau (17) a au moins un trou (20, 21) percé dans sa paroi extrême terminale (20, 20') dirigé dans le sens de l'entrée d'air en direction du bloc (18) de préfiltration.

6. Capteur selon la revendication 5, caractérisé en ce que le chapeau (17) a plusieurs trous longitudinaux espacés (21) s'ouvrant directement en face du bloc (18) de préfiltration.

7. Capteur selon la revendication 5, caractérisé en ce que le chapeau (17) a au moins un trou central longitudinal (21') s'ouvrant en face du fond concave d'un déflecteur concave (22) disposé en amont du bloc (18) de préfiltration et ayant dans sa zone périphérique des ouvertures longitudinales espacées (23) s'ouvrant directement en face du bloc (18) de préfiltration.

8. Capteur selon l'une quelconque des revendications 1 à 7, caractérisé en ce que le chapeau (17) contient plusieurs blocs successifs de préfiltration à porosité décroissante, l'ensemble retenant les particules de grosseur supérieure à une valeur prédéterminée, la couronne (9) en mousse filtrante retenant les poussières de grosseur comprise entre cette valeur et 0,5 µm.

9. Capteur selon l'une quelconque des revendications 1 à 7, caractérisé en ce que le chapeau (17) contient un bloc (18) de préfiltration retenant les particules de grosseur supérieure à 5 µm, la couronne (9) en mousse filtrante retenant les poussières de grosseur comprise entre 5 µm et 0,5 µm.

10. Capteur selon la revendication 7, caractérisé en ce que le déflecteur (22) contient un bloc de mousse de préfiltration retenant les particules de grosseur supérieure à une valeur prédéterminée.

**Patentansprüche**

1. Tragbarer, individueller Sammler für Stäube, die in der Lunge zurückgehalten werden können, mit einer drehangetriebenen Schale (8) mit einem Boden (8A) und einer Seitenwand (8B), mit einem Ring (9) aus Filterschaumstoff mit einem Mittelkanal (10), wobei der Ring in der Schale (8) angeordnet ist, mit einer Abdeckung (13) mit einem zentralen Lufteinlass (14) und einem seitlichen Luftauslass, der die Schale (8) umgibt, mit einem Aufsatz (17) mit einem Luftdurchgang, der den zentralen Lufteinlass (14) der Abdeckung (13) abdeckt und eine äussere Endwandung (20, 20') aufweist, und mit einer Einrichtung (18) zum Abtrennen der grössten Stäube, die in dem Aufsatz (17) angeordnet ist, dadurch gekennzeichnet, dass die Einrichtung (18) zum Abtrennen der Stäube aus wenigstens einem Block (18) für eine Vorfiltrierung besteht, der den Aufsatz ausfüllt, dass nach diesem Block oder diesen Blöcken eine Leitung (19) mit sich zu der Verbindungsstelle mit dem zentralen Lufteinlass (14) der Abdeckung (13) verringerndem Durchmesser vorgesehen ist, dass der Einlass (14) mit einer Auslassöffnung (15) mit geringerem Durchmesser an den Zentralkanal (10) des Ringes (9) aus Filterschaumstoff anschliesst und koaxial zu diesem Kanal (10) angeordnet ist, und dass der Ring (9) aus Schaumstoff eine Stärke, die gleich ist der Höhe der Seitenwand (8B) der Schale (8) und in einer Querschnittsebene (12) eine im wesentlichen unbedeckte Seitenfläche (11) aufweist, die zur Seite des zentralen Lufteinlasses (14) gerichtet ist.

2. Sammler nach Anspruch 1, dadurch gekennzeichnet, dass die Ausgangsöffnung (14) sich in der Querschnittsebene (12) der Seitenfläche (11) des Rings (9) aus Schaumstoff befindet.

3. Sammler nach Anspruch 1, dadurch gekennzeichnet, dass der Luftaustritt aus der Abdeckung (13) durch Löcher (16) gebildet wird, die in der Seitenwand an zwei diametral gegenüberliegenden Stellen der Abdeckung ausgebildet sind in einer Querschnittsebene, die zurückgesetzt ist gegenüber der Querschnittsebene (12).

4. Sammler nach Anspruch 3, dadurch gekennzeichnet, dass der Betrag der Zurücksetzung der Querschnittsebene durch die Löcher (16) zwischen 45% und 50% der Stärke des Ringes (9) aus Schaumstoff beträgt.

5. Sammler nach Anspruch 1, dadurch gekennzeichnet, dass der Aufsatz (17) wenigstens ein Loch (20, 21) aufweist, das in der äusseren Endwandung (20, 20') ausgebildet ist und in Richtung des Lufteintritts zu dem Block (18) für die Vorfiltrierung liegt.

6. Sammler nach Anspruch 5, dadurch gekennzeichnet, dass der Aufsatz (17) mehrere beabstandete längs verlaufende Löcher (21) aufweist, die sich direkt zu der Seite des Blockes (18) für die Vorfiltrierung öffnen.

7. Sammler nach Anspruch 5, dadurch gekennzeichnet, dass der Aufsatz (17) wenigstens ein zentrales längs verlaufendes Loch (21') aufweist, das sich zu einer konkaven Bodenfläche eines konkaven Abweisers (22) öffnet, der vor dem Block (18) für die Vorfiltrierung angeordnet ist und der in seinem Umfangsbereich längsgerichtete beabstandete Öffnungen (23) aufweist, die sich direkt zu der Fläche des Blockes (18) für die Vorfiltrierung öffnen.

8. Sammler nach einem der Ansprüche 1 bis 7, dadurch gekennzeichnet, dass der Aufsatz (17) mehrere aufeinanderfolgende Blöcke mit abnehmender Porosität für die Vorfiltrierung aufweist und dass die Anordnung der Blöcke die Teilchen mit einer Grösse, die einen vorbestimmten Wert überschreiten, zurückhalten und der Ring (9) aus Filterschaumstoff die Stäube mit einer Grösse zwischen diesem Wert und 0,5 µm zurückhält.

9. Sammler nach einem der Ansprüche 1 bis 7, dadurch gekennzeichnet, dass der Aufsatz (17) einen Block (18) für die Vorfiltrierung aufweist, der die Teilchen mit einer Grösse von mehr als 5 µm und der Ring (9) aus Filterschaumstoff die Stäube mit einer Grösse zwischen 5 µm und 0,5 µm zurückhält.

10. Sammler nach Anspruch 7, dadurch gekennzeichnet, dass der Abweiser (22) einen Block aus Schaumstoff für eine Vorfiltrierung aufweist, der die Teilchen mit einer Grösse oberhalb eines vorbestimmten Wertes zurückhält.

**Claims**

1. An individual portable trap for dust capable of being retained in the lungs, comprising a cup (8) driven in rotation, which has a bottom (8A) and a sidewall (8B), a crown (9) of filtrant foam having a central channel (10) and seated in the cup (8), a lid (13) having a central air inlet (14) and an air outlet at the side, surrounding the cup (8), a cap (17) for admission of air, covering the central air inlet (14) in the lid (13) and having an extreme endwall (20, 20'), and means (18) of separation of the coarsest dust lodged in the said cap (17), characterized in that the said means (18) of separation of the dust consist of at least one prefiltration block (18) filling the cap and that after this (these) block(s) a duct (19) is provided, having a cross-section which diminishes in value for its connection to the central air inlet (14) in the lid (13), this inlet (14) terminating at an outlet orifice (15) of diameter less than the central channel (10) in the crown (9) of filtrant foam and being arranged coaxially with this channel (10), the said crown (9) of foam having a thickness equal to the height of the sidewall (8B) of the cup (8) and exhibiting in a transverse plane (12) a substantially exposed sideface (11) turned towards the central air inlet (14).

2. A trap as in claim 1, characterized in that the outlet orifice (15) lies in the transverse plane (12) of the sideface (11) of the crown (9) of foam.

3. A trap as in claim 1, characterized in that the outlet of air from the lid (13) is effected through holes (16) pierced through its sidewall at two places diametrically opposite in a transverse plane which is set back with respect to the transverse plane (12).

4. A trap as in claim 3, characterized in that the amount of setback of the transverse plane of the holes (16) lies between 45% and 50% of the thickness of the crown (9) of foam.

5. A trap as in claim 1, characterized in that the cap (17) has at least one hole (20, 21) pierced in its extreme endwall (20, 20′) aimed in the direction of the entry of air towards the prefiltration block (18).

6. A trap as in claim 5, characterized in that the cap (17) has a number of spaced longitudinal holes (21) which open directly opposite the prefiltration block (18).

7. A trap as in claim 5, characterized in that the cap (17) has at least one central longitudinal hole (21′) which opens opposite the concave bottom of a concave deflector (22) arranged upstream of the prefiltration block (18) and has in its peripheral zone spaced longitudinal openings (23) which open directly opposite the prefiltration block (18).

8. A trap as in any one of the claims 1 to 7, characterized in that the cap (17) contains a number of prefiltration blocks in succession having decreasing porosity, the whole retaining particles of a size greater than a predetermined value, the crown (9) of filtrant foam retaining dust of a size lying between this value and 0.5 $\mu$m.

9. A trap as in any one of the claims 1 to 7, characterized in that the cap (17) contains one prefiltration block (18) which retains particles of a size greater than 5 $\mu$m, the crown (9) of filtrant foam retaining the dust of a size lying between 5 $\mu$m and 0.5 $\mu$m.

10. A trap as in claim 7, characterized in that the deflector (22) contains a block of prefiltration foam which retains particles of a size greater than a predetermined value.

## Fig:1

**Fig.2**

**Fig.3**